# EUROPEAN PATENT SPECIFICATION

(11) **EP 2 340 138 B1**
(45) Date of publication and mention of the grant of the patent: **18.03.2020**
(21) Application number: 09785481.4
(22) Date of filing: 13.08.2009
(51) Int. Cl.: B23B 31/02, B23B 31/36, B23Q 17/22, B23Q 3/18, B23Q 17/24

(54) **CHUCK DEVICE AND METHOD**
EINSPANNVORRICHTUNG UND VERFAHREN ZUM ZENTRIEREN EINES GEGENSTANDS IN EINEM SPANNFUTTER
DISPOSITIF DE MANDRIN ET PROCÉDÉ ASSOCIÉ

(30) Priority: 14.08.2008 GB 0814828
(43) Date of publication of application: 06.07.2011
(73) Proprietor: In-Situ Oilfield Services Limited, Stirling FK9 4UP (GB)
(72) Inventor: ROBB, Stewart, Stirling FK9 4UP (GB)
(74) Representative: HGF Limited
(86) International application number: PCT/GB2009/051014
(87) International publication number: WO 2010/018409

(56) References cited:
- EP-A- 1 882 548
- WO-A-2004/052592
- WO-A-2007/091021
- DE-A1-102005 007 038

## Description

The present invention relates to a chuck device and method of centring an object in a chuck. In particular, the chuck and method of the invention is useful for centring a tubular member.

The machining of tubular typically involves gripping the tubular in a chuck that is located some axial distance away from the area of the tubular to be cut. The gripping by the chuck resists the cutting forces and centres the tubular relative to the cutting tool. However, even if the exterior of the tubular is perfectly round at the axial location of the chuck, the tubular as a whole may not be geometrically truly cylindrical, and as a result, even if the tubular is correctly centred at the axial location of the chuck, the region of the tubular that is cut may not be centred with respect to the cutting tool, resulting in uneven machining. This can cause particular problems when machining tapered features on the tubular.

A typical solution to this is to grip the tubular initially in the area to be machined, with a retractable chuck, and then to grip with a second chuck further back, to match the centres of the two axially spaced apart portions of the tubular. The front chuck is then retracted to permit cutting access.

The following patent documents relate to various ways of gripping and/or adjusting the rotational centre of a gripped work piece.

WO 2004/052 592 describes an invention relating to a device and a method for centrally tightening drivable parts that rotate. The device comprises a clamping and adjusting device that comprises at least three units to clamp and adjust the location of the part. Two of the units comprise a control device which define the adjustment of the part in a radial direction according to a control value. WO 2004/052 592 also describes a measuring device that is provided to detect deviations of the part from concentricity and a calculation device provided in order to calculate the control values for the control devices, the control values are necessary to obtain concentricity of the clamped part.

DE 10 2005 007038 describes a work piece wheel head for a machine tool, especially a grinder, which includes a setting unit separate from a work piece clamp and a spindle. The setting unit comprises a motor drive that straightens the clamp for a sensor to detect eccentricity of the work piece. A straightening control is linked to the sensor and the setting drive in a closed control circuit.

EP 1 882 548 relates to a tool including a machine frame, which is provided with a medium for supporting a work piece or a tool. A working spindle is arranged to receive a work piece or the tool that is rotationally driven in reference to the machine frame. A bearing device is arranged for the bearing of the working spindle pivoted around a given rotational axis. A positioning device is controlled by a regulating signal for dynamic adjustment of the arrangement of the rotational axis.

WO 2007/091021 relates to a chuck and a method of centring an object in a chuck. The chuck comprises two pairs of jaws, wherein each pair of jaws has one jaw arranged in substantially opposing relation relative to the other jaw. The jaws are coupled together in pairs for simultaneous movement. The jaws are arranged such that movement of one jaw in a pair causes corresponding radial movement of the other jaw in that pair. Each pair of jaws can move independently of the other pair of jaws. The two pairs of jaws act together to grip/clamp the object.

The present invention provides a chuck device having at least two jaws for gripping an object, and an adjustment mechanism configured to adjust the rotational centre of the gripped object when stationary relative to a cutting position, wherein the adjustment mechanism comprises first and second adjusting devices configured to adjust the rotational centre of the gripped object in a single plane that is perpendicular to the rotational axis of the gripped object, wherein the first adjusting device is configured to move the gripped object translationally in the plane perpendicular to the rotational axis of the gripped object, and wherein the second adjusting device is configured to move the gripped object in an arcuate path in the plane perpendicular to the rotational axis of the gripped object about a pivot, wherein the pivot is offset from the axis of the gripped object.

Typically the adjustment mechanism has first and second adjusting devices, which can adjust the position of the rotational centre of the gripped object after it has been gripped in the chuck, and in typical embodiments the adjustment mechanism can adjust the rotational centre of the object on more than one axis, and typically in a single plane. The first adjuster device can typically adjust the radial position of the gripped object by moving it in a straight line. The second adjuster device can typically adjust the radial position of the gripped object by moving it in an arcuate line. Typically the straight line and the actuate line are in the same plane e.g. the same radial plane of the gripped object. More than one linear first adjuster device can be provided, but one is typically sufficient in most embodiments. In some embodiments, more than one linear (straight line) adjuster device is sufficient to adjust the rotational centre of the gripped object, and the second adjuster device with the arcuate movement is not necessary in each embodiment. Likewise, a simple embodiment of the invention could be devised with a single arcuate adjuster device, and with no linear (first) adjuster device. The second adjuster device can typically move the gripped object relative to and independently of the first adjuster mechanism.

The adjuster mechanism is typically moveable independently of the movement of the jaws.

The gripped object is typically cylindrical, and is typically a tubular for an oil, gas or water well.

Typically the chuck is mounted on a carriage that is moveable relative to a frame by means of the adjuster device(s). Typically the frame is fixed, and does not move. The carriage can have more than one slide assembly, each having a separate and respective adjuster mechanism, and each being movable relative to the other(s). Typically two slide assemblies and adjuster devices can suffice, but there may optionally be more than two, and they may operate in different planes to one another. For example, two slide assemblies can operate in the same plane (one linear, one swinging around an axis and moving the gripped object in an arc) and another slide assembly allowing movement in a different plane, for example having gimbals to permit adjustment of the long axis of the gripped object.

The chuck device typically has a sensor mechanism for detecting the position of the object gripped within the jaws. The sensor mechanism typically comprises one or more laser measurement devices, which measure the distance between each respective laser measurement device and the gripped object. Other measurement devices apart from lasers can operate equally well. Typically the sensor mechanism and the jaws of the chuck are mounted on different portions of the chuck device, so that one moves relative to the other under the actions of the adjuster mechanism. For example, when the jaws of the chuck are mounted on the carriage, then the sensor mechanism is typically mounted on the frame, so that the chuck moves radially with the adjuster devices, relative to the radially stationary laser devices on the fixed frame. In certain embodiments, the sensor mechanism can translate axially with respect to the gripped device, to measure the distance between the sensors and the gripped device in a different axial location on the gripped device, for example, adjacent to a cutting tool. Therefore, the chuck device can sense the actual rotational centre of the gripped device at the location to be cut, by obtaining the measurement information from the sensor devices, and can then move the rotational centre of the jaws gripping the object to ensure that the object is centred at the position to be cut, and not necessarily at the chuck.

The sensor devices can therefore have translation mechanisms to move them axially with respect to the gripped object, for measurement of the rotational centre of the gripped object in another location, and can then return them to the original location on the chuck device. Typically the sensor devices are arranged in pairs.

Each of the sensor devices in each pair typically faces the other sensor device in the pair. Thus the sensor devices can optionally be arranged in opposite directions to one another and are typically radially aligned with an axis of one of the adjuster devices, typically the first adjuster device. The readings from the sensors are typically used to drive the adjusting devices to a null position in which the object is centred in the area to be cut. This can be done under power, or manually. There can be a servo loop between the reading devices and the adjuster devices to automate the movements.

The chuck device is suitable for use in machining devices in which the gripped object is held stationary and the cutting tool in moved rotationally and axially, and in this case, the chuck device is employed to move the gripped object to a position that is concentric with the rotational axis of the cutting tool. However, it is also applicable to other machining devices in which the gripped object is rotated relative to a cutting tool that is moved radially and axially but is not rotated.

The invention also provides a method of centring an object in a chuck device as defined by Claim 12.

One embodiment of the invention provides a chuck device having two or more jaws for gripping a first part of an object, an adjustment mechanism for adjusting the rotational centre of the jaws gripping the first part of the object, and a sensor device to determine the rotational centre of a second part of the object spaced away from the first part, whereby the adjustment mechanism allows adjustment of the rotational centre of the second part of the object to centralise the second part of the object with respect to the sensor device.

An embodiment of the invention will now be described by way of example, with reference to the accompanying drawings, in which:
Figs 1 to 11 are sequential views of a first chuck device in the process of gripping and centring a tubular (figs 1, 2, 5, and 6 being perspective views, and figs 3, 4, and 7-11 being end views);
Fig 12 is an end sectional view of a second chuck device;
Fig 13 is a plan sectional view of the second chuck device in Fig 12; and
Fig 14 is a side sectional view of the second chuck device in Fig 12.

Referring now to the drawings, a first chuck device 1 has a frame 10 typically forming the front wall of a milling device. The chuck device 1 is typically adapted for milling tubulars T, and the front wall of the device comprising the frame 10 typically has an aperture (not shown) to allow the tubular to pass through the frame 10. The aperture can be rectangular or circular, to accommodate the object being gripped. In the present design, the chuck device 1 holds the tubular T stationary, while a milling head with a cutting tool (not shown in this embodiment) rotates around the stationary tubular T. However, in other embodiments of the device, it is possible to rotate the gripped tubular or other gripped device around a cutting tool that is stationary, or that moves in a restricted manner (for example only axially and radially).

The frame 10 acts as a stationary mount for an adjusting mechanism, which can move the axis of the tubular in order to align it with the rotational centre of the cutting head. The adjusting mechanism carries gripping jaws 25, for example four jaws 25 are provided in the adjusting mechanism for gripping the tubular T and holding it stationary. The adjusting mechanism can then be actuated after the tubular T is gripped by the jaws 25, so as to adjust the alignment of the tubular in accordance with the desired rotational centre of the cutting device. The adjusting mechanism will now be more specifically described.

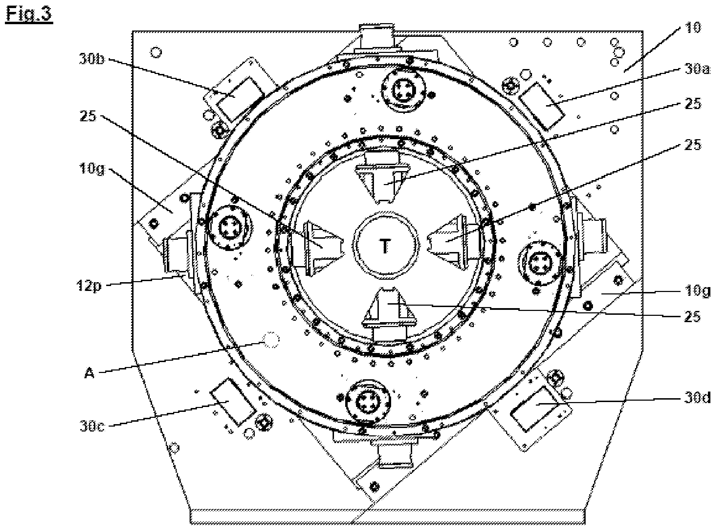

In the chuck device 1, the adjusting mechanism comprises a carriage having a first adjuster 12 and a second adjuster 20. The first adjuster 12 is a linear adjuster, and typically comprises a rectangular plate 12p mounted on the flat outer surface of the frame 10 and able to slide in a single plane that is parallel to the outer flat surface of the frame 10. The plate 12p is constrained to slide diagonally by linear slide guides 10g which are fixed to the outer surface of the frame 10, and which can restrain the extent of movement of the plate 12p, but permit it to slide along the diagonal, e.g. from bottom left to top right as shown in Fig. 3, or from top right to bottom left.

The second adjuster device 20 is mounted on the slidable plate 12p, and typically comprises a pair of annular plates 20a, 20b, with concentric apertures 21 that generally align with the aperture in the sliding plate 12p, and with the aperture in the frame. The aligned apertures 21 are configured to receive and allow passage of the tubular T or any other gripped object to be used with the chuck device1.

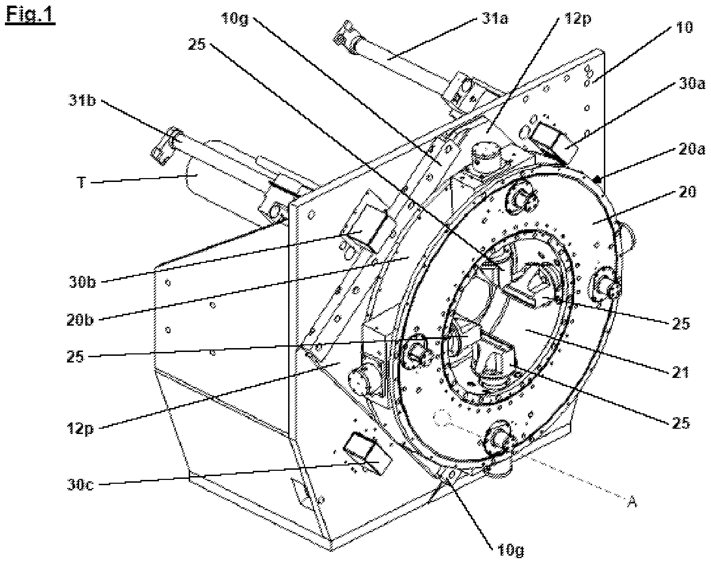

The second adjuster device 20 is typically connected to the sliding plate 12p by means of a pivot pin (not shown in this embodiment) that extends perpendicularly to the pair of annular plates and to the sliding plate 12p along axis A as shown in Fig. 1. Thus, the second adjuster mechanism 20 can swing around the pivot pin on axis A relative to the sliding plate 12p. It should be noted that linear sliding movement of the plate 12p will move the swinging second adjuster mechanism 20 with the same linear displacement as is applied to the plate 12p. However, rocking movement of the second adjuster device 20 relative the plate 12p around the pivot point A does not involve any consequential movement of the plate 12p.

The concentric annular plates 20a, 20b of the second adjuster mechanism 20 also act as the mounting for four jaws 25. The jaws 25 are arranged to move radially with respect to the central axes of the annular plates 20a, 20b, in order to grip the tubular T within the apertures 21.

Because the two adjusting mechanisms 12 and 20 permit the adjustment of the location of the axis of the annular rings in the second adjuster 20 relative to the fixed plate 10, the rotational axis of the tubular T gripped within the jaws 25 can be adjusted with respect to the cutting tool at another location.

The chuck device 1 optionally has a sensor mechanism in the form of four laser measuring heads 30a-d. The laser measuring heads 30 are mounted on hydraulic pistons 31 that are mounted on and extend though the frame 10. The pistons 31 drive the axial extension of the laser measuring heads 30 perpendicular to the fixed frame 10. The heads 30 emit laser beams radially inwardly toward the gripped tubular T (or other object) and the distance from each head 30 to the outer surface of the tubular T is measured and optionally reported to a processor (not shown). By extending the hydraulic pistons 31 to move the position of the heads 30 relative to the fixed frame 10, the rotational centre of the tubular T can be measured not only at the position of the chuck (with the pistons retracted), but also at the position of the cutting device (with the pistons extended).

The operation of the first chuck device will now be described with reference to Figs 1 to 11.

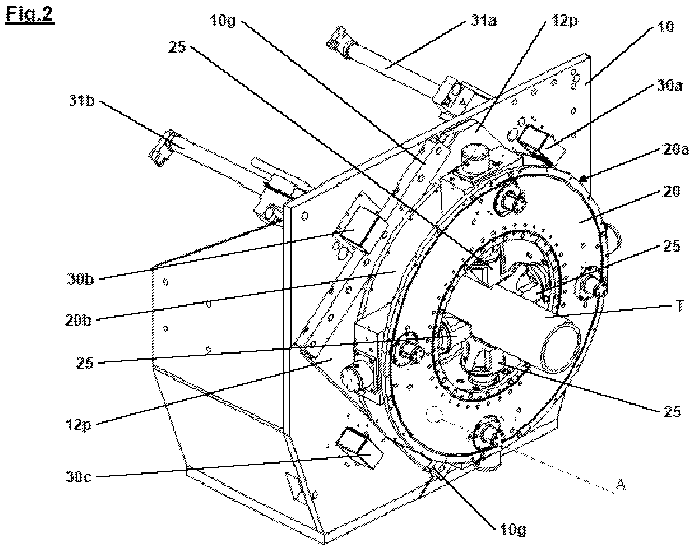

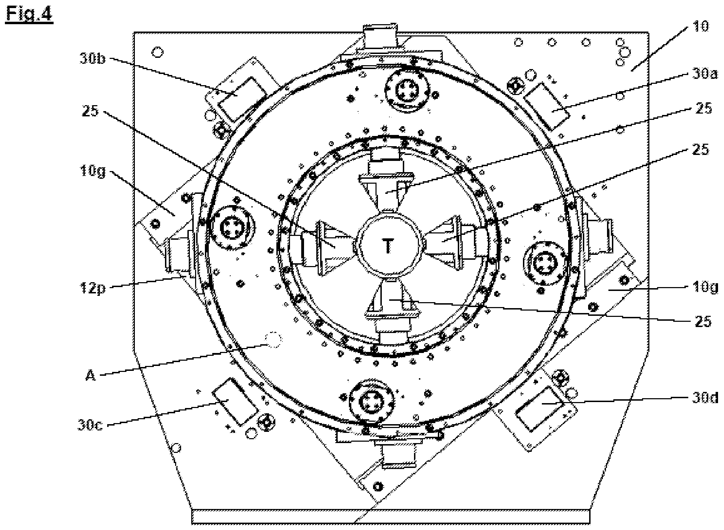

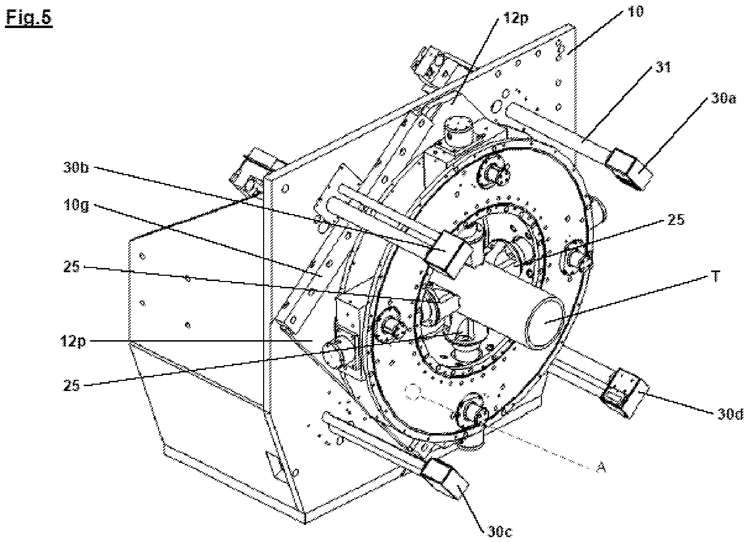

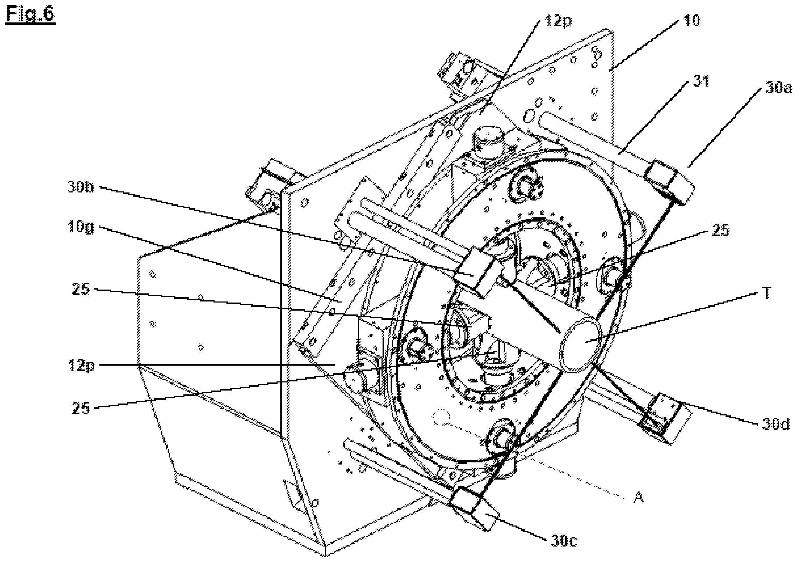

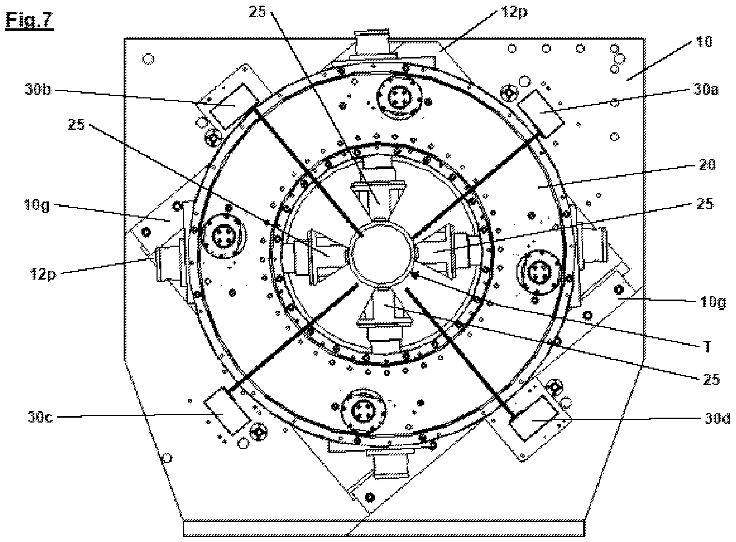

The tubular T is offered to the concentric apertures 21 in the frame 10, sliding plate 12 and annular plates 20a, 20b, which house the jaws 25 and can swing around the pivot point A relative to the sliding plate 12p. At this point, the hydraulic pistons 31 are retracted, as are the jaws 25, as shown in Fig. 1. As tubular T is passed through the concentric apertures to protrude from the central aperture 21 of the annular plate 20a as shown in Fig. 2, the jaws 25 are initially retracted as shown in Fig. 3, but as shown in Fig. 4 the jaws are then advanced radially inwardly to grip the tubular T as shown in Fig. 4, in preparation for the machining of the end of the tubular T protruding from the aperture 21. With the jaws gripping the tubular T, the pistons 31 are extended as shown in Fig. 5 to drive the heads 30 of the laser measurement devices perpendicularly away from the plane of the frame 10 so that the laser measurement devices 30 are directed at the end of the tubular T that is to be cut by a cutting tool. The laser measurement devices 30 are then actuated as shown in Fig. 6 to measure the distance between the respective heads 30a-d and the outer surface of the tubular T, in the area of the tubular T to be cut. As shown in Fig. 7, although the gripped end of the tubular T is centred with respect to the second adjuster 20, the tubular T is not perfect cylindrical, and the end of the tubular T to be cut is not aligned with the rotational centre of the cutting tool.

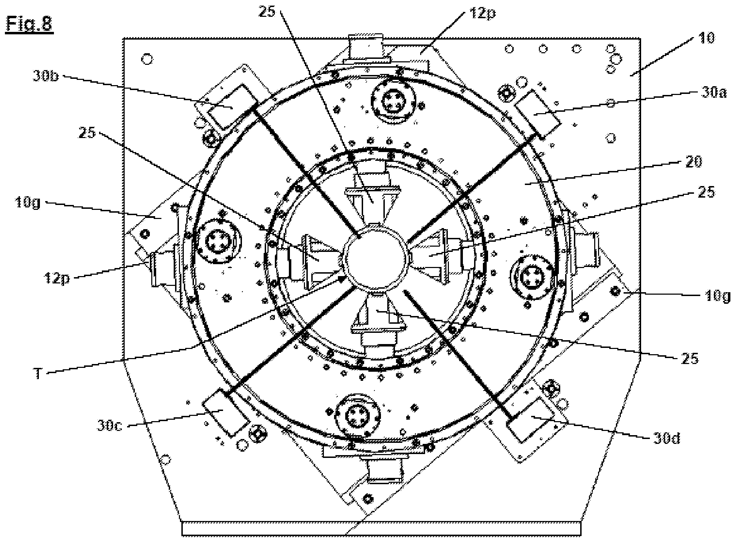

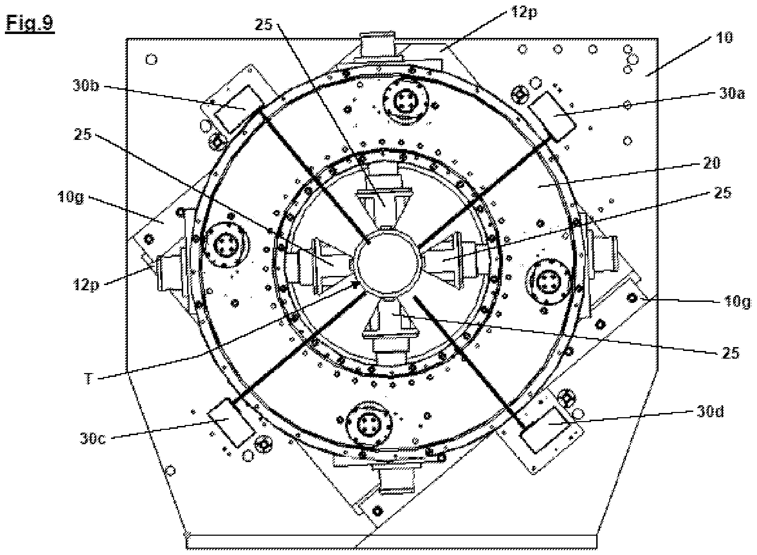

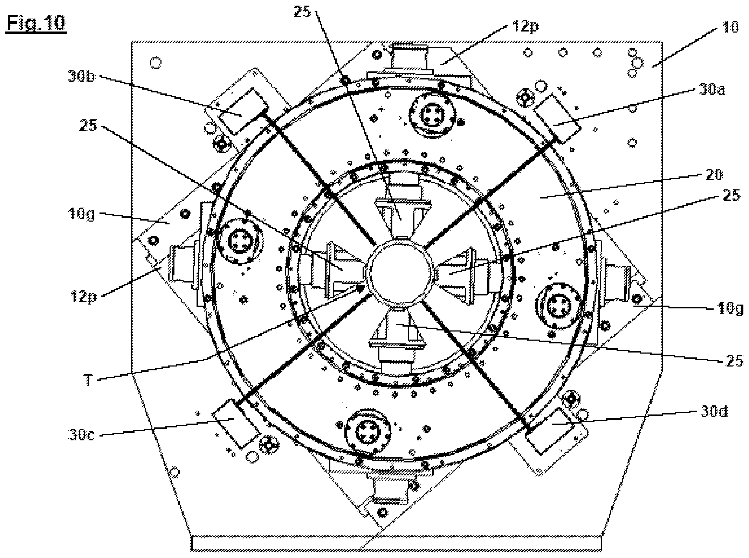

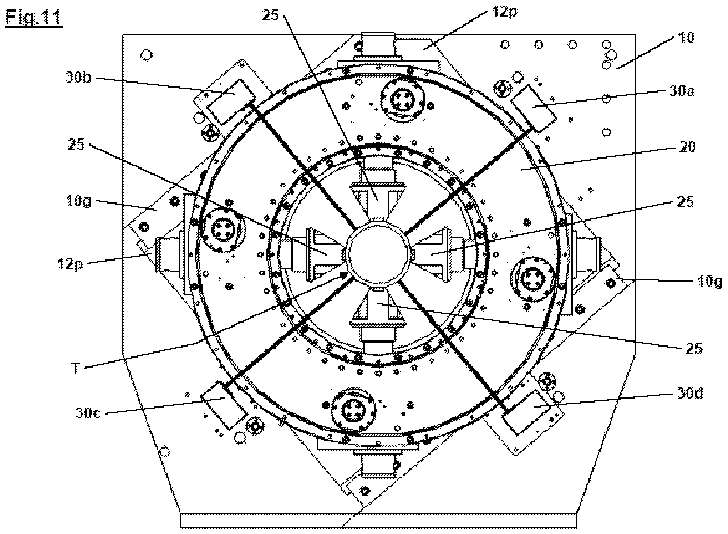

In order to correct this, the first adjuster device 12 is actuated in order to slide the plate 12p from top right of Fig. 7 to bottom left resulting in a sliding movement of the plate 12p between Figs 7 and 8 so that the tubular T moves closer to laser measurement device 30c, and further away from laser measurement device 30a. However, as shown in Fig. 8, the tubular T is still too close to laser measurement device 30b, and too far away from laser measurement device 30d, in the bottom right of Fig.8. Therefore, once a suitable adjustment of the sliding plate 12p has been effected, the second adjusting device 20 is then actuated in order to swing the tubular T around the axis A of the pivot pin connecting the second adjuster 20 to the first adjuster 12. Thus, the tubular T is moved in a shallow arc from the position shown in Fig. 8 (toward the lower right laser measurement device 30d, through the position shown in Fig.9, where the tubular T is still moving towards the laser measurement device 30d, until it reaches the position shown in Fig. 10, where the axis of the tubular T has moved slightly too far toward the laser measurement device 30d, and needs to move back slightly around the pivot point A towards the top left laser measurement device 30b, finally coming to rest at the substantially aligned position shown in Fig. 11, where the extended end of the tubular T to be cut is the same distance from each of the laser measurement devices 30. The laser measurement devices and their axial translocation mechanisms are periodically calibrated to ensure that they are concentric with the rotational axes of the cutting tool to be used.

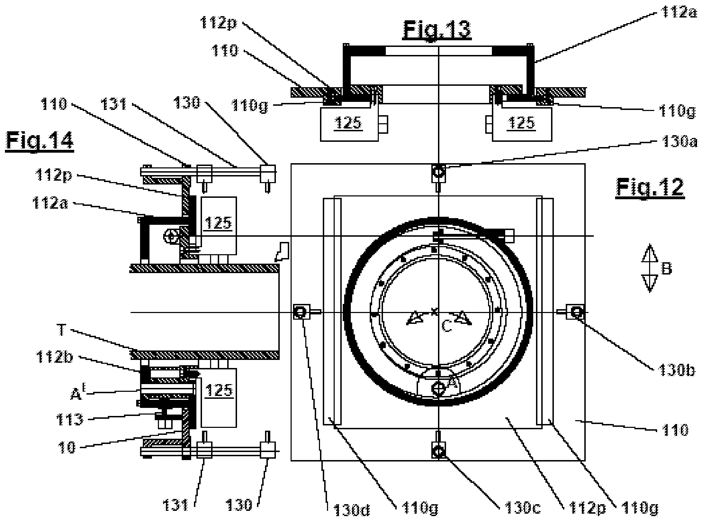

Referring now to Figs. 12, 13 and 14, a detailed view of a second chuck device is shown. The second chuck device 101 has many features in common with the first chuck device1, and similar components will be allocated the same reference number, but increased by 100. The second chuck device 101 therefore has a frame 110, with a first adjuster mechanism 112 and a second adjuster mechanism 120. In the second chuck device 101, the frame 110 constrains a plate 112p by means of slide guides 110g. The plate 112p slides vertically on the frame 110 from top to bottom as shown in Fig. 12. As before, the second adjuster mechanism 120 is pivotally connected at pivot point A' to sliding plate 112p and slides along with it, although it can pivot relative to the sliding plate 112p. The sliding movement of the plate 112p is actuated by a linear actuator 113 (shown in Fig. 14) which comprises a bolt held captive on the frame 110, and engaging within a captive nut or threaded socket attached to axial arm 112A extending from the inside face of the sliding plate 112p. Rotation of the bolt of the linear actuator 113 within the captive nut on the axial arm 112a moves the plate 112p up and down in the direction of the arrow B shown in Fig. 12.

As described above, the second adjuster mechanism 120 comprises a pair of concentric annular plates 120a, 120b, as described for the first chuck device, which house the jaws 125 that grip the tubular T and which is pivotally connected to the first linear adjuster 112 by means of pivot pin A'. Pivot pin A' extends through the swinging assembly of the second adjuster device 120, through the plate 112p, and terminates in a bearing assembly on a back plate 112B of the first adjuster device 112 as shown in Fig. 14.

As described for the first embodiment, the tubular T is initially gripped by the jaws 125 (there can be two, three, or four, or some other number of jaws 125) which are mounted on the second adjuster device 120. After the tubular T has been centred with respect to the second adjuster device 120, the sliding plate 112p is slid vertically up and down by the linear actuator 113 until a suitable position is found where the axis of the tubular T in the area to be cut is close to the rotational centre of the cutting tool 140 , after which the second adjuster mechanism 120 is pivoted around the pivot pin A' in accordance with the arrow C shown in Fig. 12, until the laser measuring devices 130 indicate that the end of the tubular T to be machined is concentric with a cutting tool 140.

The second adjusting device 120 can be swung around the pivot A' by means of a rocking assembly actuator, comprising a bolt held captive on the sliding plate 112p, and engaging in a nut held captive on the rear face of the second adjuster device 120. The adjustments can be completed by hand, or can be automated with several motors.

## Claims

1. A chuck device (1;101) having at least two jaws (25;125) for gripping an object (T), and an adjustment mechanism configured to adjust the rotational centre of the gripped object relative to a cutting position; **characterised in that**:
adjustment of the rotational centre of the gripped object takes place whilst the object is stationary and adjustment is in a single plane that is perpendicular to the rotational axis of the gripped object, wherein the adjustment mechanism comprises first and second adjusting devices configured to adjust the rotational centre of the gripped object (T) in the plane perpendicular to the rotational axis of the gripped object, wherein the first adjusting device (12;112) is configured to move the gripped object (T) translationally in the plane perpendicular to the axis of the gripped object, and wherein the second adjusting device (20;120) is configured to move the gripped object (T) in an arcuate path in the plane perpendicular to the axis of the gripped object about a pivot (A), wherein the pivot (A) is offset from the axis of the gripped object (T).

2. A chuck device as claimed in claim 1 , wherein the adjustment mechanism is configured to adjust the rotational centre of the gripped object on more than one axis.

3. A chuck device as claimed in claim 1, wherein the first and second adjusting devices are configured to adjust the rotational centre of the gripped object after it has been gripped in the jaws.

4. A chuck device as claimed in any preceding claim, wherein the second adjusting device is configured to move the gripped object in relation to the first adjusting device.

5. A chuck device as claimed in any preceding claim, wherein the adjustment mechanism is configured to move the rotational centre of the gripped object independently of the movement of the jaws to grip the object.

6. A chuck device as claimed in any preceding claim having a sensor mechanism (30) for detecting the position of the object gripped within the jaws.

7. A chuck device as claimed in claim 6, wherein the sensor mechanism comprises one or more laser measurement devices (30a-30d), which are arranged to measure the distance between each respective laser measurement device and the gripped object.

8. A chuck device as claimed in claim 6 or claim 7 , wherein the sensor mechanism and the jaws are mounted on different portions of the chuck device, so that one moves relative to the other under the actions of the adjustment mechanism.

9. A chuck device as claimed in any one of claims 6 to 8, wherein the sensor mechanism has a translation mechanism to move the sensor mechanism axially with respect to the gripped object, for measurement of the rotational centre of the gripped object in more than one spaced apart location.

10. A chuck device as claimed in any one of claims 7 to 10, wherein the sensor devices are arranged in opposing pairs.

11. A chuck device according to any of claims 6 to 10, wherein the at least two jaws are operable to grip a first part of the object, the adjustment mechanism is operable to adjust the rotational centre of the jaws gripping the first part of the object, and the sensor device is operable to determine the rotational centre of a second part of the object spaced away from the first part, whereby the adjustment mechanism allows adjustment of the rotational centre of the second part of the object to centralise the second part of the object with respect to the sensor device.

12. A method of centring an object in a chuck device in preparation for machining the object, the method comprising gripping the object in the jaws of a chuck device, and adjusting the rotational centre of the object gripped in the jaws **characterised by** adjusting the rotational centre when the gripped object is stationary, wherein adjusting the rotational centre of the gripped object comprises adjusting the rotational centre of the gripped object in a single plane that is perpendicular to the rotational axis of the gripped object via first and second adjusting devices, wherein the first adjusting device provides a translational adjustment in the plane perpendicular to the rotational axis of the gripped object, and wherein the second adjusting device provides a step of rotational adjustment, wherein the gripped object is movable in an arcuate path in the plane perpendicular to the rotational axis of the gripped object about a pivot, wherein the pivot is offset from the axis of the gripped object.

13. A method as claimed in claim 12, wherein the chuck device has a sensor mechanism for detecting the position of the object gripped within the jaws, and the method includes the step of measuring the distance from the sensors to the gripped object in the location of the gripped object to be machined, and adjusting the position of the object at the jaws so that the gripped object is centred in the area to be cut.

## Patentansprüche

1. Einspannvorrichtung (1; 101) mit mindestens zwei Spannbacken (25; 125) zum Ergreifen eines Objekts (T), und einem Einstellmechanismus, der konfiguriert ist, um das Rotationszentrum des ergriffenen Objekts relativ zu einer Schnittposition einzustellen;
**dadurch gekennzeichnet, dass**:
die Einstellung des Rotationszentrums des ergriffenen Objekts erfolgt, während das Objekt stationär ist, und die Einstellung in einer einzigen Ebene ist, die senkrecht zur Rotationsachse des ergriffenen Objekts ist, wobei der Einstellmechanismus erste und zweite Einstellvorrichtungen umfasst, die konfiguriert sind, um das Rotationszentrum des ergriffenen Objekts (T) in der Ebene senkrecht zur Rotationsachse des ergriffenen Objekts einzustellen, wobei die erste Einstellvorrichtung (12; 112) konfiguriert ist, um das ergriffene Objekt (T) translatorisch in der Ebene senkrecht zur Achse des ergriffenen Objekts zu bewegen, und wobei die zweite Einstellvorrichtung (20; 120) konfiguriert ist, um das ergriffene Objekt (T) in einem bogenförmigen Pfad in der Ebene senkrecht zur Achse des ergriffenen Objekts um einen Drehpunkt (A) zu bewegen, wobei der Drehpunkt (A) gegenüber der Achse des ergriffenen Objekts (T) versetzt ist.

2. Einspannvorrichtung nach Anspruch 1, wobei der Einstellmechanismus konfiguriert ist, um das Rotationszentrum des ergriffenen Objekts an mehr als einer Achse einzustellen.

3. Einspannvorrichtung nach Anspruch 1, wobei die erste und zweite Einstellvorrichtung konfiguriert sind, um das Rotationszentrum des ergriffenen Objekts einzustellen, nachdem es in den Backen ergriffen wurde.

4. Einspannvorrichtung nach einem der vorangehenden Ansprüche, wobei die zweite Einstellvorrichtung konfiguriert ist, um das ergriffene Objekt in Relation zur ersten Einstellvorrichtung zu bewegen.

5. Einspannvorrichtung nach einem der vorangehenden Ansprüche, wobei der Einstellmechanismus konfiguriert ist, um das Rotationszentrum des ergriffenen Objekts unabhängig von der Bewegung der Backen zu bewegen, um das Objekt zu ergreifen.

6. Einspannvorrichtung nach einem der vorangehenden Ansprüche, das einen Sensormechanismus (30) zum Detektieren der Position des in den Backen ergriffenen Objekts aufweist.

7. Einspannvorrichtung nach Anspruch 6, wobei der Sensormechanismus eine oder mehrere Lasermessvorrichtungen (30a-30d) umfasst, die angeordnet sind, um den Abstand zwischen jeder jeweiligen Lasermessvorrichtung und dem ergriffenen Objekt zu messen.

8. Einspannvorrichtung nach Anspruch 6 oder Anspruch 7, wobei der Sensormechanismus und die Backen an unterschiedlichen Abschnitten der Einspannvorrichtung montiert sind, so dass sich unter den Einwirkungen des Einstellmechanismus, der eine bezüglich des anderen bewegt.

9. Einspannvorrichtung nach einem der Ansprüche 6 bis 8, wobei der Sensormechanismus einen Translationsmechanismus aufweist, um den Sensormechanismus axial bezüglich des ergriffenen Objekts zu bewegen, um das Rotationszentrum des ergriffenen Objekts an mehr als einem beabstandeten Standort zu messen.

10. Einspannvorrichtung nach einem der Ansprüche 7 bis 9, wobei die Sensorvorrichtungen in gegenüberliegenden Paaren angeordnet sind.

11. Einspannvorrichtung nach einem der Ansprüche 6 bis 10, wobei die mindestens zwei Backen bedient werden können, um einen ersten Teil des Objekts zu ergreifen, der Einstellmechanismus betrieben werden kann, um das Rotationszentrum der den ersten Teil des Objekts ergreifenden Backen einzustellen, und die Sensorvorrichtung betrieben werden kann, um das Rotationszentrum eines zweiten Teils des Objekts, der vom ersten Teil beabstandet ist, zu bestimmen, wodurch der Einstellmechanismus eine Einstellung des Rotationszentrums des zweiten Teils des Objekts ermöglicht, um den zweiten Teil des Objekts bezüglich der Sensorvorrichtung zu zentrieren.

12. Verfahren zum Zentrieren eines Objekts in einer Einspannvorrichtung in Vorbereitung auf eine Bearbeitung des Objekts, wobei das Verfahren ein Ergreifen des Objekts in den Backen einer Einspannvorrichtung, und ein Einstellen des Rotationszentrums des in den Backen ergriffenen Objekts umfasst, **gekennzeichnet durch** das Einstellen des Rotationszentrums, wenn das Objekt stationär ist, wobei das Einstellen des Rotationszentrums des ergriffenen Objekts ein Einstellen des Rotationszentrums des ergriffenen Objekts in einer einzigen Ebene, die senkrecht zur Rotationsachse des ergriffenen Objekts ist, über erste und zweite Einstellvorrichtungen umfasst, wobei die erste Einstellvorrichtung eine translatorische Einstellung in der Ebene senkrecht zur Rotationsachse des ergriffenen Objekts bereitstellt, und wobei die zweite Einstellvorrichtung einen Schritt der Rotationseinstellung bereitstellt, wobei das ergriffene Objekt in einem bogenförmigen Pfad in der Ebene senkrecht zur Rotationsachse des ergriffenen Objekts um einen Drehpunkt bewegt werden kann, wobei der Drehpunkt bezüglich der Achse des ergriffenen Objekts versetzt ist.

13. Verfahren nach Anspruch 12, wobei die Einspannvorrichtung einen Sensormechanismus zum Detektieren der Position des in den Backen ergriffenen Objekts aufweist, und das Verfahren den Schritt des Messens des Abstands von den Sensoren zum ergriffenen Objekt am Standort des zu bearbeitenden ergriffenen Objekts, und des Einstellens der Position des Objekts an den Backen umfasst, so dass das ergriffene Objekt auf den zu schneidenden Bereich zentriert wird.

## Revendications

1. Dispositif de mandrin (1;101) comportant au moins deux mors (25;125) pour serrer un objet (T), et un mécanisme de réglage conçu pour régler le centre de rotation de l'objet serré par rapport à une position de coupe ; **caractérisé en ce que** :
le réglage du centre de rotation de l'objet serré a lieu pendant que l'objet est stationnaire et le réglage se fait dans un seul plan qui est perpendiculaire à l'axe de rotation de l'objet serré, ledit mécanisme de réglage comprenant des premier et second dispositifs de réglage conçus pour régler le centre de rotation de l'objet serré (T) dans le plan perpendiculaire à l'axe de rotation de l'objet serré, ledit premier dispositif de réglage (12;112) étant conçu pour déplacer l'objet serré (T) par translation dans le plan perpendiculaire à l'axe de l'objet serré, et ledit second dispositif de réglage (20;120) étant conçu pour déplacer l'objet serré (T) dans un trajet courbe dans le plan perpendiculaire à l'axe de l'objet serré autour d'un pivot (A), ledit pivot (A) étant décalé par rapport à l'axe de l'objet serré (T).

2. Dispositif de mandrin selon la revendication 1, ledit mécanisme de réglage étant conçu pour régler le centre de rotation de l'objet serré sur plus d'un axe.

3. Dispositif de mandrin selon la revendication 1, lesdits premier et second dispositifs de réglage étant conçus pour régler le centre de rotation de l'objet serré après qu'il ait été serré dans les mors.

4. Dispositif de mandrin selon l'une quelconque des revendications précédentes, ledit second dispositif de réglage étant conçu pour déplacer l'objet serré par rapport au premier dispositif de réglage.

5. Dispositif de mandrin selon l'une quelconque des revendications précédentes, ledit mécanisme de réglage étant conçu pour déplacer le centre de rotation de l'objet serré indépendamment du déplacement des mors pour serrer l'objet.

6. Dispositif de mandrin selon l'une quelconque des revendications précédentes comportant un mécanisme de capteur (30) pour détecter la position de l'objet serré à l'intérieur des mors.

7. Dispositif de mandrin selon la revendication 6, ledit mécanisme de capteur comprenant un ou plusieurs dispositifs de mesure à laser (30a à 30d), qui sont agencés pour mesurer la distance entre chaque dispositif de mesure à laser respectif et l'objet serré.

8. Dispositif de mandrin selon la revendication 6 ou 7, ledit mécanisme de capteur et lesdits mors étant montés sur différentes parties du dispositif de mandrin, de sorte que l'un se déplace par rapport à l'autre sous les actions du mécanisme de réglage.

9. Dispositif de mandrin selon l'une quelconque des revendications 6 à 8, ledit mécanisme de capteur comportant un mécanisme de translation pour déplacer le mécanisme de capteur axialement par rapport à l'objet serré, pour la mesure du centre de rotation de l'objet serré dans plus d'un emplacement espacé.

10. Dispositif de mandrin selon l'une quelconque des revendications 7 à 9, lesdits dispositifs de capteur étant agencés en paires opposées.

11. Dispositif de mandrin selon l'une quelconque des revendications 6 à 10, lesdits au moins deux mors étant actionnables pour serrer une première partie de l'objet, ledit mécanisme de réglage étant actionnable pour régler le centre de rotation des mors serrant la première partie de l'objet, et le dispositif de capteur étant actionnable pour déterminer le centre de rotation d'une seconde partie de l'objet espacé de la première partie, grâce à quoi le mécanisme de réglage permet le réglage du centre de rotation de la seconde partie de l'objet pour centraliser la seconde partie de l'objet par rapport au dispositif de capteur.

12. Procédé de centrage d'un objet dans un dispositif de mandrin en préparation de l'usinage de l'objet, le procédé comprenant le serrage de l'objet dans les mors d'un dispositif de mandrin, et le réglage du centre de rotation de l'objet serré dans les mors **caractérisé par** le réglage du centre de rotation lorsque l'objet serré est stationnaire, ledit réglage du centre de rotation de l'objet serré comprenant le réglage du centre de rotation de l'objet serré dans un seul plan qui est perpendiculaire à l'axe de rotation de l'objet serré via des premier et second dispositifs de réglage, ledit premier dispositif de réglage fournissant un réglage translationnel dans le plan perpendiculaire à l'axe de rotation de l'objet serré, et ledit second dispositif de réglage fournissant une étape de réglage rotationnel, ledit objet serré pouvant être déplacé dans un trajet courbe dans le plan perpendiculaire à l'axe de rotation de l'objet serré autour d'un pivot, ledit pivot étant décalé de l'axe de l'objet serré.

13. Procédé selon la revendication 12, dans lequel le procédé de mandrin comporte un mécanisme de capteur pour détecter la position de l'objet serré à l'intérieur des mors, et ledit procédé comprenant l'étape de mesure de la distance des capteurs à l'objet serré dans l'emplacement de l'objet serré à usiner, et de réglage de la position de l'objet au niveau des mors de sorte que l'objet serré soit centré dans la zone à découper.
